# EUROPEAN PATENT APPLICATION

(11) **EP 4 485 324 A1**
(43) Date of publication of application: **01.01.2025**
(21) Application number: 23181971.5
(22) Date of filing: 28.06.2023
(51) Int. Cl.: G06Q 20/38

(54) **SECURE ONBOARDING UNIT, ELECTRONIC TOKEN TRANSACTION SYSTEM, METHOD OF SECURELY MANAGING TRANSACTIONS AND NON-TRANSITORY COMPUTER READABLE STORAGE MEDIUM**

(71) Applicant: Giesecke+Devrient advance52 GmbH, 81677 München (DE)
(72) Inventor: Hupel, Lars, 81677 München (DE); Kreitmaier, Franziska, 81677 München (DE)
(74) Representative: Ter Meer Steinmeister & Partner

(57) **Abstract**

The invention relates to a secure onboarding unit (200) within an electronic token transaction system (100). The onboarding unit comprises:
an onboarding repository (202) configured to store a plurality of onboarding IDs for registered participants (106) in the electronic token transaction system (100);
means (206) for accessing the onboarding repository (202); and
means (210, 208, 204) adapted to:
i) receive an onboarding request from a participant (106) of the electronic token transaction system (100), the onboarding request comprising ID data of the participant (106) and/or of a transaction unit (108) of the participant (106);
ii) generate an onboarding ID by hashing the ID data, and
iii) verify the uniqueness of the generated onboarding ID against the onboarding repository (202) in a privacy-enhancing manner using a lossy compressed data structure, thereby reducing the risk of fraudulent multiple onboarding IDs and/or customer accounts.

## Description

The invention relates to a to a secure onboarding unit within an electronic token transaction system. The invention also relates to an electronic token transaction system, in particular a system comprising a server hosting a platform for securely managing transactions between at least one service provider and at least one service customer. The invention also relates to a method of securely managing transactions between at least one service provider and at least one service customer, in particular a service customer having customer ID data and using services of the service provider.

Electronic transaction systems have radically changed the way transactions, specially financial transactions, are conducted around the world. These systems are able to perform financial transactions digitally, eliminating the need for physical cash and enabling instant, seamless transactions. They also offer the ability to monitor and record transactions, making them a powerful tool for maintaining transactional transparency and accountability.

While these systems offer significant benefits, they also raise a number of issues. The increasing scale and complexity of electronic transactions requires more sophisticated methods to prevent fraudulent behaviour, such as the creation of multiple accounts by a single user. In addition, as these systems deal with sensitive financial data, robust measures are required to protect user privacy. Developing solutions that effectively address these issues is a major concern in the ongoing evolution of electronic transaction systems. The assignment of a participant/user and its accessibility within the transaction system must be secure against fraudulent behaviour.

In view of the above, a secure onboarding unit within an electronic token transaction system according to claim 1, an electronic token transaction system according to claim 7, a method of securely managing transactions between at least one service provider and at least one service customer according to claim 13 and a non-transitory computer readable storage medium according to claim 15 are provided.

A secure electronic transaction system is a digital system that facilitates the exchange of value or data between parties, i.e. participants in the electronic token transaction system, over a network. This can include financial systems for transferring money, e-commerce platforms for buying and selling goods, or any other system where digital transactions are executed. These systems provide the necessary infrastructure for initiating, processing, and recording transactions of tokens.

A participant in / user of the electronic token transaction system assigned to at least one secure transaction unit such as a secure element, a terminal device, a system, or a software program involved in the execution of electronic transactions of tokens. The participant may be a natural person, a legal entity, a company, a machine, a service, etc. It includes a service customer, a service provider unit, and/or a service of a service provider unit. Participants interact with each other to complete token transactions, which can range from online payments (purchases) and digital payments to electronic fund transfers and beyond.

A service customer / client is a participant in the electronic token transaction system accessing services offered by a service provider unit. A service customer is a unit adapted to make online purchases, a company processing digital payments or any other technical entity accessing the services of the transaction system to carry out electronic transactions. The service customer is in most cases the initiator of a transaction, requesting a specific service from a service provider.

A service provider unit is a participant in the electronic token transaction system that offers services used by service consumers. This may be an e-commerce platform that facilitates online sales, a payment gateway that processes digital payments, a bank that enables electronic token transfers, or any other technical entity that provides the infrastructure or services necessary to carry out electronic transactions. The service provider unit may respond to the service customer's requests and may perform the necessary actions to complete the transaction.

A service of a service provider unit is a participant in the electronic token transaction system that provides a service offered by the service provider unit. This may be a token transaction logging service, transaction unit logging service, a loading service, an unloading service, a key providing/ generating service, a certification service, system monitoring service, a token issuance service, a transaction unit (wallet) data managing service, a (financial) service provider unit data managing service.

A token is a unit of data or a digital asset or electronic coin representing a unit of value, a digital currency, preferably a central bank digital currency (CBDC), a right to access a service, or a record of ownership. A token representing a digital currency may be issued and deleted by a unit of the transaction system, such as an issuing authority or a central bank unit or a commercial bank unit, hereinafter referred to as a token issuing unit, that is in the present document a secure token issuing unit. A token may be a digital resource, a digital certificate, a single record in a database, and may be used to pay for (purchase) goods and services, to participate in voting or other governance processes, or to receive rewards.

For managing the tokens, such as performing token transactions and storing the tokens, secure token transaction units, also known as token management units, are used.

A secure token transaction unit may be referred to in the art as a wallet, which is a digital container that stores information used to make payments, redeem rewards, or access other services. The secure token transaction unit may be a token transaction unit, which can be used to locally manage the token in a secure element itself, to modify the tokens and to register the token in the electronic transaction system.

The secure token transaction unit, also referred to as a secure account management unit, may be used to manage tokens in a decentralised ledger, such as a blockchain, or a centralised ledger, such as a database, that stores the token centrally in the electronic transaction system. The management, modification and/or registration of the tokens in the electronic transaction system may be initiated by the token transaction unit. The token transaction or token storage may be performed remotely by another secure element or a service provider unit.

Token transaction units can be software-based or hardware-based and can be used to store a variety of information, including tokens, asset values, credit card numbers, loyalty card numbers, boarding pass numbers and other relevant data. A token transaction unit can be implemented as a software application, or as a hardware device, such as a USB drive or a smartcard / chipcard.

A service provider unit can be a financial service provider, such as a commercial bank or a fintech company. Additionally, a service provider unit can be an official authority or a mobile communication service provider unit. It can also be any other regulated or non-regulated party that participates in the electronic transaction system, including a payment transaction involving a central bank digital currency (CBDC) as authorized by the token issuing authority.

A repository refers to a central or distributed data store where information about users or transactions is stored. This may include details of user data, transaction entities, transaction histories or other relevant data. It provides a source of information for the electronic transaction system and facilitates data retrieval, validation, and management operations.

ID data of a unit or entity generally refers to identification data of the unit or entity. Participant ID data is a digital ID data that refers to a unique identification information / identifying data of a participant, such as name, identity card number, or tax identification (tax ID), or any other data that is assigned to a real person during a registration process conducted by an official authority, such as a resident registration office, a tax office, or a vehicle registration authority and that uniquely identifies the participant within an electronic token transaction system. The participant to whom the secure token transaction unit is to be allocated may be referred to as the "real" participant.

The digital ID data may be preferably encrypted and centrally stored at a central instance to be accessed by the control means of the transaction unit issuing unit. This central instance may be an official authority or a central bank of the electronic token transaction system or any other trusted authority in the payments ecosystem as per the assignment of the token issuing authority. It is not stored at the service provider unit.

The term "centrally stored" means storing the digital ID data in a centrally governed, central, or decentralized implementation of any kind of central or distributed ledger.

The term "accessed" means a direct accessing or a joint accessing according to a governed process that may involve one or more legally authorized units.

The digital ID data may only be received by the control means upon explicit request, including a compliance process, to avoid unnecessary transmittal of this ID data.

The digital ID data is cryptographically secured by the control means. The part of the transaction unit ID data is a digital ID data that refers to a unique identification information / identifying data of a transaction unit and may be identical to the participant ID data.

ID data or digital ID data is a generic term that refers to participant ID data and/or to transaction unit ID data.

Hashing is the process of converting an input of any length into a fixed size string of text using a mathematical algorithm known as hash function. The output, or hash, is virtually unique to each unique input, in that any change to the input, even a small one, will produce a drastically different output hash. Although the process can be reversed, for example by trying all possible inputs to see if they produce a given hash, such a reversal involves the use of computational resources that are very challenging to provide.

Onboarding is the process by which a participant in an electronic transaction system is registered and added to the system. This process often involves verifying the participant's identity, setting up his account or digital transaction unit, and ensuring he has the necessary permissions and access to begin transacting within the system.

The punctuation mark "/" (slash) is understood as "or". The term "or" can also be understood in an explanatory way, for example as "i.e.".

According to an aspect of the invention, a secure onboarding unit is provided within a secure electronic token transaction system. The secure token transaction system is adapted to manage the exchange or transfer of electronic tokens, i.e. digital representations of assets or value, and the secure onboarding unit is adapted to securely manage processes such as adding new users, e.g. by ensuring their unique identification and registration.

The secure onboarding unit comprises an onboarding repository configured to store a plurality of onboarding IDs for registered participants in the electronic token transaction system. The participant may refer to an entity that engages in the transactions facilitated by the system, e.g. a service customer such as an individual user or an enterprise, or a service provider such as a Financial Service Provider units or a healthcare service provider unit.

The secure onboarding unit further comprises means for accessing the onboarding repository. These means may include, for example, a server hosting an application that, when requested by a user, makes a database query to the onboarding repository, which may be designed as a database.

The secure onboarding unit further comprises means adapted to receive an onboarding request from a participant in the electronic token transaction system. Such means may include, for example, a server-side function that handles HTTP POST requests sent by clients (users or their devices) wishing to join the system.

The onboarding request from the participant of the electronic token transaction system comprises participant ID data, such as individual identification information of the person or organisation using the system, or a token transaction unit such as an account used by the participant for transactions.

The secure onboarding unit further comprises means adapted to generate an onboarding ID by hashing the participant's ID data. Such means may include, for example, a server hosting a software module that uses the SHA-256 cryptographic hash function.

The secure onboarding unit further comprises means adapted to verify the uniqueness of the generated onboarding ID against the onboarding repository in a privacy-enhancing manner using a lossy compressed data structure. This may relate to checking a newly generated onboarding ID against existing IDs in the onboarding repository to ensure that it is unique, or has not been used previously. The verification process uses a lossy compressed data structure, which allows for compact storage of the data, improves data privacy as a complete reconstruction of the original data can no longer be made, but occasionally also leads to false positives.

The described features of the secure onboarding unit, especially the means adapted to generate an onboarding ID by hashing the participant's ID data, and the means adapted to verify the uniqueness of the generated onboarding ID against the onboarding repository, allow to reduce the risk of fraudulent multiple onboarding IDs and/or multiple customer accounts.

According to an aspect of the invention, an electronic token transaction system is provided. Tokens - also referred to as digital assets, electronic coins, coin data sets - may represent any digital asset. There are a number of possible ways or alternatives for implementing the electronic token transaction system, of which some examples are given below.
1. A blockchain-based system can provide a secure, decentralised ledger for recording transactions. This can be particularly beneficial for creating transparency, as every transaction is recorded on a blockchain and can be audited. This is the principle behind cryptocurrencies such as bitcoin and ethereum. An example of this implementation could be the use of ethereum's smart contracts to facilitate, verify or enforce the negotiation or performance of a contract.
2. A centralised, server-based system may involve one or more central servers managing and/or registering token transactions. When a token transaction takes place, centralized servers such as registers, are updated. The above referenced third approach is considered an example hereof, and the tokens may be CBDC.
3. A distributed ledger system may be a digital system for recording asset transactions in which token transactions and their details are recorded in multiple locations simultaneously. Unlike traditional databases, distributed ledgers have no central data storage or management functionality.
4. A peer-to-peer (P2P) network-based system may involve a decentralised peer-to-peer network that could also be used to facilitate token transactions. In this case, transactions would take place directly between users.
5. A hybrid system may combine aspects of several of the above. For example, a system may use a centralised server to manage accounts and process large transactions, while using a blockchain to audit and verify transactions.
6. A mobile wallet may be adapted to generate a token that represents the customer's credit card information. The token may be passed to the merchant, protecting the customer's actual card details .

The system comprises one or more secure token transaction units. The token transaction units may be digital containers in which tokens are stored and used to perform transactions, preferably implemented as software applications on a smartphone or a smart card. A service customer or each service customer is allowed to have only one transaction unit.

The system further comprises one or more service provider units. These may be financial institutions, merchants, or other entities involved in providing services required to facilitate transactions within the electronic token transaction system, such as services related to account management, payment processing, or other financial services.

The system further comprises an onboarding unit as described above. This unit is responsible for registering and managing the entry of new participants into the system. It creates a unique ID for each participant, and verifies its uniqueness against an onboarding repository, to prevent fraudulent multiple onboarding IDs or multiple customer accounts.

An onboarding ID or each onboarding ID is associated with exactly one participant in the electronic transaction system. Preferably, an onboarding ID or each onboarding ID is associated with exactly one transaction unit. Preferably, a participant or each participant may have no more than one onboarding ID and no more than one transaction unit. This may be achieved by labelling or associating both the participant and its transaction unit with a unique onboarding ID.

According to an aspect of the invention, a method of securely managing transactions in an electronic token transaction system between at least one service provider and at least one service customer having customer ID data and using services of the service provider is provided. The method comprises:
a) providing an onboarding repository for storing onboarding IDs for registered customers;
b) generating an onboarding ID by hashing the customer ID data; and
c) verifying the uniqueness of the onboarding ID against the onboarding repository in a privacy-enhancing manner using a lossy compressed data structure.

After verifying the uniqueness of the onboarding ID in step c), a result is returned, which can be a binary value, e.g. "yes/no". In case of "yes", the uniqueness is considered satisfied, and the participant is allowed to access the transaction system. In the case of "no", where uniqueness is not satisfied, the participant is not allowed to access the transaction system.

The method, especially based on steps b) and c), allows reducing the risk of fraudulent multiple onboarding IDs and/or customer accounts.

According to an aspect of the invention, a non-transitory computer readable storage medium for tangibly storing computer program instructions capable of being executed by a processor is provided. The computer program instructions implement / execute the steps of the method described above.

Some effects and advantages relating to the secure onboarding unit, the electronic token transaction system, the method of securely managing transactions and the non-transitory computer readable storage medium are described as follows.

The secure onboarding unit provides a robust and protected framework within the electronic token transaction system. By operating securely, it ensures that the process of introducing new participants to the system is not susceptible to external threats or vulnerabilities, thereby enhancing the overall security of the system and increasing participant confidence in the transaction process.

The onboarding repository serves as the fundamental database for the electronic token transaction system. It houses the onboarding IDs of registered participants, providing a well-organised and centralised location for this critical data. The availability of such a repository makes the management and verification of participant data more efficient, thereby increasing the reliability and integrity of the system.

The means for accessing the onboarding repository ensures that the data stored in the repository can be effectively accessed and used, and enables the matching and verification of the uniqueness of a new onboarding ID against existing IDs, which is a critical step in the onboarding / enrolment process. This ensures that each participant in the electronic token transaction system has a unique and secure identification.

The means adapted to receive an onboarding request from a participant of the electronic token transaction system enables the system to receive and process new participant entries. Providing a secure channel for participants to submit onboarding requests ensures the integrity of participant data right from the point of entry, while maintaining a seamless operational flow that contributes to a positive participant experience.

The means adapted to generate an onboarding ID by hashing the participant's ID data allows raw, clear text participant data to be converted into a hashed onboarding ID. This enhances the privacy and security of participant data by transforming it into a hashed data. Although trial and error may be applied as an attack, especially for participant data that span only small data rooms, it is at least more difficult - and in cases of big data rooms nearly impossible - to do a reverse-engineering, thereby reducing the potential for fraudulent activities within the system.

The means adapted to verify the uniqueness of the generated onboarding ID against the onboarding repository acts as a check against fraudulent activity, ensuring that each participant is unique and that no individual can maintain multiple accounts within the system. This measure increases the integrity and fairness of the system and discourages fraudulent or malicious activity.

Generating an onboarding ID by hashing the customer ID data i) ensures that no single user can create multiple accounts under the same ID, thereby reducing the risk of fraud, and/or ii) makes the data difficult to reverse engineer, thereby ensuring that the original data cannot be fully reconstructed, and/or ensures that the unique customer ID data generates a unique hash value or onboarding ID based on the fact that it is extremely unlikely that two different inputs will produce the same hash (a situation known as a "collision"), thereby increasing privacy, and/or iii) allows for a reduction in storage space requirements.

The use of a lossy compressed data structure allows a large number of records to be stored in a smaller space, preserving system performance and saving storage resources, and enhances privacy by making direct listing of plain text data impossible, adding another layer of privacy protection for participants.

The risk of fraudulent multiple onboarding IDs and/or customer accounts is reduced to near zero by hashing the customer's ID data and then checking that onboarding ID against the repository for any duplicates, preventing the creation of multiple accounts by a single user. Even if there is a hash collision (i.e., different data resulting in the same hash), the uniqueness check using a lossy compressed data structure will prevent a false positive account creation.

Preventing the creation of multiple accounts is beneficial as it mitigates against various methods of financial fraud:
- money laundering, where illicit funds are passed through multiple accounts to disguise their original source and make them appear legitimate; and/or
- Sybil attacks, where an individual creates multiple fake accounts to manipulate the platform's services or reputation systems; and/or
- credit fraud, where an individual creates multiple accounts to apply for multiple lines of credit or other financial instruments with the intent to default on those obligations.

In one embodiment, the onboarding unit may be adapted to return a unique result to the participant after verifying the uniqueness of the onboarding ID. This feature enhances security by confirming the successful creation of a unique ID, reducing the likelihood of duplicate entries and increasing system integrity and participant confidence. The unique result can be a binary value, thereby protecting / preserving the privacy of customer data.

In one embodiment, the lossy compressed data structure may be adapted to prevent the generation of false negatives, preferably by hashing the inputs into a bit array. The achieved effect achieved is based on the probabilistic nature of said data structure, where each input is hashed into multiple positions in a bit array, ensuring that an element can only be considered present if all of its associated positions are activated, thereby guaranteeing the absence of false negatives.

In one embodiment, the ID data comprises at least one or more of the following:
- A tax ID. This is a unique identifier assigned by the government to each taxpayer ensuring the absolute uniqueness of each participant, the identifier enhancing the integrity of the system and the traceability of the participant.
- A transaction unit identifier. This is a unique tag associated with each individual transaction unit within the system, the tag improving the organisation of the system and making it easier to track, verify and audit transactions.
- A terminal identifier. This is a unique label associated with each point of interaction within the system, the label improving the system management and enabling more accurate tracking and troubleshooting of hardware issues.
- A service identifier. This is a unique symbol assigned to each service provided within the system, improving service management by making it easier to allocate resources and monitor service usage.
- A cryptographic key. This is a piece of information used to encrypt or decrypt data that increases the security of the system by providing robust encryption and decryption capabilities.
- A digital signature. This is a mathematical scheme for verifying the authenticity of digital messages or documents; the signature enhances the security of the system by providing robust verification of the authenticity of messages or documents.
- A service provider unit identifier. This is a unique identifier uniqueily assigned to the service provider within the system ensuring the absolute uniqueness of the service provider unit. This identifier may be sufficient to determine whether (and where) the participant already has an onboarding ID or not.

In one embodiment, the hashed ID can be divided into overlapping fragments and thus partitioned into multiple sections that share common parts, thereby creating overlapping fragments that increase the robustness of the uniqueness check by performing multiple checks across different fragments, thereby reducing the likelihood of false positives. This fragmentation enhances security and data integrity by requiring multiple checks against different segments of the hashed ID, making unauthorised access or fraudulent activity significantly more difficult.

In one embodiment, a fragment or each fragment of the fragmented hashed ID can have its own onboarding repository with a lossy compressed data structure. This means that each fragment derived from the fragmented hashed ID can have its own unique onboarding repository. This design can increase data security by decentralised storage, reduce the likelihood of false positives due to multiple checks, and increase system efficiency by allowing different fragments to be processed simultaneously.

In one embodiment, rejection of a customer may only be allowed if the repositories confirm their respective fragments, thereby advantageously providing an additional level of verification, which may have the effect of reducing the likelihood of erroneous rejections due to false positives and/or enhancing privacy by further obfuscating user data.

In one embodiment, the onboarding unit may be adapted to implement and perform a uniqueness check for each individual onboarding process using two or more, preferably 3 or 4, or if applicable 5 to 10, different lossy compressed data structures arranged in parallel. This may have the effect of reducing the likelihood of false positives and increasing the accuracy of the uniqueness check and may advantageously improve the reliability and accuracy of the system by cross-checking the uniqueness of onboarding processes across multiple data structures.

In one embodiment, the lossy compressed data structure may be implemented as at least one of the following, thereby ensuring that no false negatives are produced:
- Bloom filter, which is a probabilistic data structure that tests whether an element is a member of a set, advantageously allowing an efficient use of space and fast membership queries, and/or scalable and quick uniqueness checks.
- Cuckoo filter, which is a data structure similar to, but superior to, the Bloom filter in that it advantageously supports deletion of elements and improves space efficiency, thereby providing more flexibility in data handling.
- Quotient filter, which provides a similar functionality to a Bloom filter, but additionally supports an efficient iteration over the elements in the filter, which advantageously provides an improved cache efficiency.

In one embodiment, the electronic token transaction system may comprise a server hosting a platform for securely managing transactions between at least one service provider and at least one service customer having customer ID data and using services of the service provider. The platform provides a framework upon which various services or operations may be performed, and provides the necessary infrastructure for secure transaction management between service providers and service customers. The platform also provides a centralised architecture that facilitates secure interactions between service providers and customers within the system, using unique customer identifiers for transaction management. In this way, the system ensures secure and efficient transactions while improving data integrity, reducing fraud and promoting a smoother user experience in the digital payment ecosystem.

In one embodiment, the platform may be adapted to securely manage at least one of the following:
- Financial transactions, thereby enabling the management and processing of monetary exchanges such as fund transfers, payments and other fiscal operations. This provides platform users with a secure, efficient and streamlined solution for their financial transactions, thereby increasing user confidence and system usage, while reducing risks associated with fraudulent activities.
- E-commerce transactions, enabling the handling of operations associated with online shopping, from order placement to final delivery. This enables secure and efficient online shopping experiences.
- Healthcare transactions, enabling operations such as booking appointments, accessing medical records and/or purchasing medication. This enables a high level of trust and security in health-related digital interactions, promoting better healthcare outcomes and improving patient satisfaction.
- Logistics transactions, enabling the management of activities related to supply chain operations, including tracking, shipping and delivery of goods. This enables the secure management of logistics transactions, providing the platform to increase supply chain visibility, reduce potential errors and fraud, and improve the overall efficiency of logistics operations.

In one embodiment, the platform, especially the service provider, may be adapted to issue a single transaction unit per service customer based on a uniqueness check by the onboarding unit for a proposed onboarding ID against a lossy compressed data structure storing all valid onboarding IDs. This can ensure system integrity by preventing multiple transaction units being owned by a single user. This design provides secure user authentication and minimises the risk of fraudulent transactions by ensuring that each user is assigned a single unique transaction unit; it also promotes privacy as the use of lossy compressed data structures protects user data while maintaining system efficiency.

In one embodiment, the one or more secure service providers may be configured to manage electronic transactions, in particular electronic payment transactions, and may form the basis of the application of the system, which is centred on the secure facilitation and management of electronic transactions.

In one embodiment, the electronic token transaction system may comprise a secure token issuing entity. This entity ensures the creation and management of tokens within the platform.

The token issuing entity may comprise:
- a minting unit configured to generate a new token to be issued in the platform, the token then being made available for issuance and use within the platform; and
- a melting unit configured to delete tokens to be deleted from the platform, the melting unit being responsible for deleting or removing tokens from the platform when they are no longer required or valid, thereby ensuring proper token management and preventing the accumulation of unnecessary or expired tokens.

The electronic token transaction system may further comprise:
- one or more service providers such as financial service providers, commercial banks, fintech companies, government agencies, mobile communication service providers, or any other regulated or non-regulated party participating in the platform; and
- at least one token register for registering the tokens of the platform, the register being configured to store relevant information about each token, such as its identification, ownership, status, and any associated metadata, thereby ensuring proper tracking, management, and verification of the tokens within the system.

In one embodiment, the token issuing entity, such as a central bank or an official authority, can provide ID data in a cryptographically secured manner. The ID data can be signed with an electronic signature of the token issuing entity or an official authority. Alternatively, or in addition, the ID data can only be provided in a cryptographically secured manner using symmetric or asymmetric encryption schemes such as PKI. Official certificates can also be used to cryptographically secure the ID data.

In one embodiment, the method of securely managing transactions between at least one service provider and at least one service customer may further comprise at least one of the steps of:
- Issuing the at least one transaction unit by a service provider of the platform. The transaction units enable the service customers to perform secure and authorised transactions.
- Receiving the onboarding ID of a service customer by control means of a service provider. The onboarding ID is used to uniquely identify the customer within the platform.
- Providing transaction unit ID data by deriving at least a part of the transaction unit ID data based on at least the onboarding ID. This data is associated with the transaction unit and is used to uniquely identify and link it to the corresponding service customer.
- Assigning the transaction unit ID data to a transaction unit for the service customer to which the transaction unit is to be issued on the platform. This step may ensure that the transaction unit is uniquely identified and associated with the correct service customer and may comprise generating of the transaction unit ID data at the transaction unit issuing entity. In this case, the provision may be the encoding of the ID data by the control means of the transaction unit issuing entity. Each token transaction made by the transaction unit and/or each token being managed, e.g. stored, by the transaction unit may be locally logged, and in the event of a suspicious transaction or fraudulent pattern, the logs may be reviewed.
- Issuing the transaction unit to the service customer on the platform. This enables the service customer to use the transaction unit to conduct transactions securely and with the required authorisation.

In one embodiment, a token issuing unit, such as a central bank or an official authority, may provide digital ID data only in a cryptographically secured manner. The digital ID data may be signed with an electronic signature of the token issuing unit or an official authority. Alternatively, the digital ID data may be provided only in a cryptographically encrypted manner, such as encrypted according to a symmetric or asymmetric encryption scheme, such as PKI. Official certificates may also be used to cryptographically secure the ID data.

In one embodiment, the transaction unit ID data may be a mandatory data to be transmitted between individual participants in the electronic transaction system for direct exchange of tokens. This ensures high standard security, and in such a case, the transaction unit ID data is not only used to uniquely identify the electronic participant but also to identify the "real" participant by resolving the ID data. One data for identifying both the "real" and electronic participant is required, reducing the overall data transfer rates for token transactions.

In one embodiment, the transaction unit ID data can comprise a plurality of data fields. One of the plurality of data fields may be used for inserting the derived part of the transaction unit ID data.

One or more other data fields of the plurality of data fields may include a version value that expresses the current version of the transaction unit ID data format used.

One or more other data fields of the plurality of data fields may include an identifier of the token issuing entity to express the token issuing authority of the electronic transaction system. With such a data field, multi-currency token transactions can be enabled.

Preferably, the transaction unit ID data may further comprise a data element for a type-value configured to identify the type of the digital ID data.

Preferably, the transaction unit ID data may further comprise a data element for a count-value configured to identify the number of transaction units issued by the service provider.

Preferably, the transaction unit ID data may be inserted into a subject name data field of a cryptographic certificate used within a transaction or storage of tokens within the electronic transaction system. Since certificates may be used to clearly identify the participant in a token transaction/ storage, no additional data set is required to derive the "real" participant in case of a suspicious transaction or suspiciously stored token.

The service provider further may comprise a transaction unit comprising control means for managing one or more tokens of the electronic transaction system using the transaction unit ID data to log a direct exchange of one or more tokens with one or more other transaction units in the electronic transaction system, wherein the control means is configured to cause the direct exchange of the one or more tokens with the one or more other transaction units in the electronic transaction system and to send registration requests including token references to a token register of the electronic transaction system.

The service provider may comprise a token storage accessible by the control means of the service provider, preferably the control means of the transaction unit.

The token transaction unit may be implemented in a secure element, e.g., as a hardware-transaction unit. Alternatively, the transaction unit may be implemented as a hosted-transaction unit with a service provider unit.

The transaction unit ID data may be stored in the token transaction unit.

Each token can comprise a monetary value as a first token element. The monetary value may be data that represents money usable in one or more electronic payment transactions.

Each token further may comprise a private value as a second token element. The private value may be referred to as a blinding value (e.g., obfuscation amount) or may be a random number or a secret not known to participants not involved in a transaction. The private value may be a private element of a token element pair. A corresponding public element of such a token element pair may be used as an element in a token reference stored in a token register to register first-type tokens and second-type tokens.

In addition, each token may have further token elements such as metadata, e.g., currency data indicating the currency that the monetary amount represents and/or validity data and/or timestamp data.

The token may also be referred to as a value note and may be used in online and offline payment transactions. The token may represent central bank digital currency, CBDC.

The token may comprise one or more token-individual history entries as a further token element. A history entry may represent a modification, such as SWITCH, SPLIT, MERGE, performed with this token. Such a further token element may also be referred to as history data.

It is possible to use tokens exclusively in offline electronic payment transactions between two directly communicating token management units (e.g. secure elements) within the electronic payment transaction system.

An online electronic payment transaction may be defined as a transaction in which a transaction unit (e.g. in a secure element) involved in the transaction, such as the transaction unit initiating the token transfer (payer) or the transaction unit receiving a token (payee), has access to and can communicate with one or more remote instances of the electronic payment system, such as a token register, a transaction register, a token issuing unit, a service provider, such as a financial service provider (FSP), via traditional Internet or mobile communication means or any other appropriate online communication protocol. Immediately before, during or after the execution of the transaction, one of the transaction units involved in the transaction also registers the transaction by storing a corresponding token reference in a remote token register.

An off-line electronic payment transaction is defined here as a direct transaction between two transaction units (e.g. residing in secure elements) involved in the transaction, e.g. the transaction unit initiating the token transfer (payer) and/or the transaction unit receiving a token (payee). At least one of the payer or the payee does not have access to and cannot communicate with remote instances of the transaction system, such as a token register, a transaction register, a token issuing unit and/or a service provider, such as a financial service provider (FSP), via classical Internet or mobile communication means. The token transfer may then take place via local wireless communication means such as Bluetooth, NFC or any other suitable wireless communication protocol. The token can also be transferred via contact based communication means such as USB, ISO 7816 or any other suitable contact based communication protocol.

To register a token in a token registry, a token reference of the token may be generated. Each token reference includes a public value and a monetary value as two distinct token reference elements.

The public value as a token reference element may be a public key of an asymmetric cryptographic key pair, the private value of the token being the private key of the asymmetric cryptographic key pair. In this embodiment, the private value and the public value are considered to be a pair of token elements.

The token reference may also include a monetary value as a separate token reference element. This monetary value may be the monetary value of the first type token from which the one or more second type tokens are derived. If only one second type token is generated in the generation step, the monetary value of the second type token may be used as the monetary value for the token reference, since both monetary values are the same.

The token reference can be sent to and stored in the token register. Thus, a token may be registered as a valid token in the transaction system and can be used for further online or offline electronic payment transactions.

A token "managed" by a token management unit, such as the secure element or transaction unit described above, is defined here as a token for which the token management unit holds a corresponding private value of a token element pair (public value and private value).

Preferably, therefore, only a token management unit in possession of a private value of a token can effectively manage a token, i.e. initiate or approve changes (such as SWITCH, SPLIT, MERGE) of the token.

It is possible to define that the transfer of a token from one token management unit to another token management unit includes the transfer of the private value of the token from the first token management unit to the second token management unit.

Further advantages and features of the present disclosure are apparent from the dependent claims, the description and the accompanying drawings.

### Brief description of the drawings

So that the manner in which the above recited features of the present disclosure can be understood in detail, a more particular description of the present disclosure, briefly summarized above, may be had by reference to typical embodiments. The accompanying drawings relate to embodiments of the present disclosure and are described in the following:
Fig. 1 shows a secure electronic payment transaction system for token transactions with secure transaction units of the prior art;
Fig. 2 shows a symbol diagram of a secure onboarding unit within an electronic token transaction system according to the invention;
Figs. 3a-3c show a symbol diagrams of embodiments of an electronic token transaction system according to the invention;
Fig. 4 shows a symbol diagram of a service provider according to the invention; and
Fig. 5 shows a symbol diagram of the method of securely managing transactions according to the invention.

### Detailed description of embodiments

Reference will now be made in detail to the various embodiments, one or more examples of which are illustrated in each figure. Any embodiment may be combined with any other embodiment, if technically reasonable and/or allowed. Each example is provided by way of explanation and is not meant as a limitation. For example, features illustrated or described as part of one embodiment can be used on or in conjunction with any other embodiment to yield yet a further embodiment. It is intended that the present disclosure includes such modifications and variations.

Within the following description of the drawings, the same reference numbers refer to the same or to similar components. Generally, only the differences with respect to the individual embodiments are described.

The reference numbers of the figures are used merely for illustration. The aspects of the invention are not limited to any particular embodiment. Instead, any aspect or embodiment described herein can be combined with any other aspect or embodiment described herein unless specified otherwise.

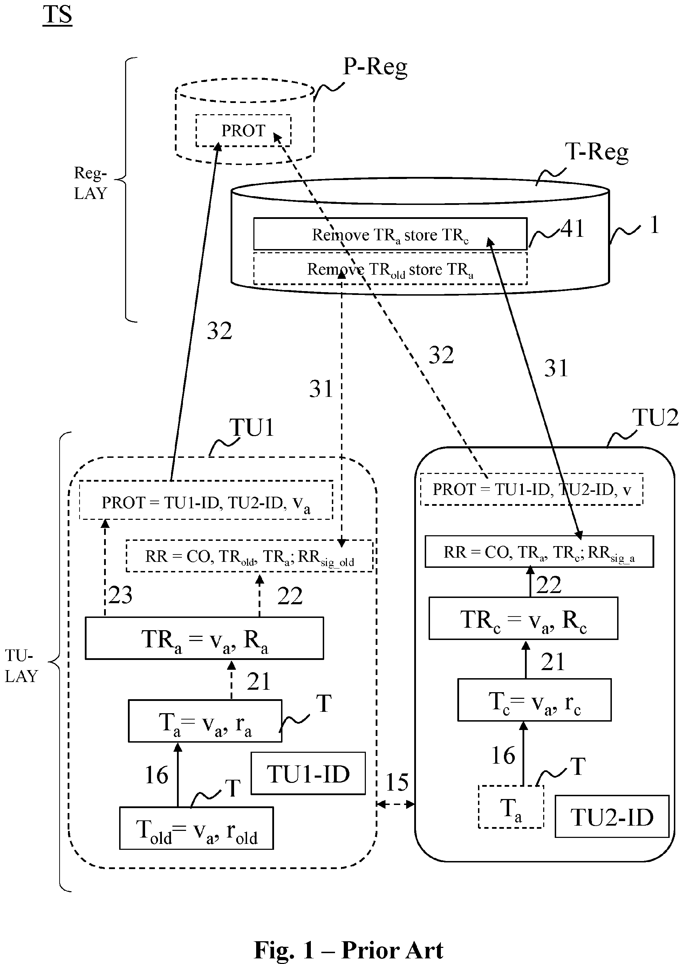

Fig. 1 shows an example of a secure electronic token transaction system TS with secure transaction units TU according to the prior art. The secure electronic token transaction system TS of Fig. 1, e.g. a payment transaction system, corresponds with the third approach as indicated above. The transaction system TS comprises a register layer Reg-LAY in which a token reference register T-Reg is arranged. The TS further comprises a direct transaction layer TU-LAY in which a plurality of transaction units TU may be provided, as an example, two transaction units TU1 and TU2 are shown in Fig. 1. TU1 and the TU2 have control means configured to generate registration requests RR that comprise modification-commands CO concerning a modification of a token, here Tₐ of the secure transaction unit TU1 and T_{c} of the secure transaction unit TU2.

The transaction units TU of the transaction system TS are arranged to exchange 15 tokens T directly with each other. In the case of Fig. 1, T_{old}, Tₐ and T_{c} are payment tokens, which are also referred to as digital coins, preferably CBDC. Each token T in the TS is generated by a transaction unit TU-I of a specific token issuer (not shown in Fig. 1).

Each token T can be modified, such as split, merged or switched, by applying modification-commands CO by each transaction unit TU.

Each token T can be generated by a transaction unit TUI of a token issuer and can also be deleted. A transaction unit TU-I of a token issuer is, for example, a commercial bank or a financial service provider unit FSP.

Modification-commands are compliant with the above described third approach and it is refrained from repeating these modifications here again. Each modification can be registered in the T-Reg by replacement requests (=registration requests) RR.

A token T is uniquely represented by a monetary value v as well as a random number r. Thus, each token T in this TS has at least two token elements.

The monetary value v as a first mandatory token element can be specified in a range of values from 1 to 2³¹-1. The random number r may be a number in the range of 0 to 2²⁵⁶ - 1, i.e., the order of an elliptic curve, for example secp256r1. For example, the token value v is a 32-bit token element of type integer.

The random number r as a second mandatory token element is a private key of a token-individual key pair. The random number r is unique and secret in the transaction system TS and may not be published or reused. The generation of the random number r must be unpredictable. For example, the random number r is a 32-Byte token element of type integer.

A transaction unit TU has exclusive access to a storage unit (vault) or includes a token memory in a data store of the transaction units TU.

For each token T, a token reference TR can be stored in the token reference register T-Reg. The token reference TR comprises the monetary value v (of the token T) and a public key R that corresponds to the private key r of the token-individual key pair. The token reference TR of the token T can be viewed at any time in the register T-Reg of the transaction system TS.

TU1 is in possession of T_{old} that comprises a monetary value vₐ as well as a random number r_{old}. TU1 switches T_{old} to Tₐ with a switch-modification in step 16. Tₐ comprises the monetary value vₐ (of the T_{old}) as well as a newly generated random number rₐ. In step 21, the TU1 generates a TRₐ that is uniquely assigned to the Tₐ.

This token reference TRₐ can be sent 31 to the token reference register T-Reg in form of a registration request RR by the TU1 (being generated in step 22), if necessary, together with a command CO.

Additionally, the registration request RR is signed with the private key r_{old}. Signing makes it possible to verify that TU1 is in possession/knowledge of the token T_{old}, further enhancing security in the transaction system TS.

The registration request RR generated 22 in TU1 relating to a switch-modification in Fig. 1 includes the modification command CO, the output token references TRₐ of token Tₐ to be registered and the input token reference TR_{old} of the token T_{old} to be removed from the token reference register T-Reg. The registration request RR also comprises a signed registration request RR_{sig}__{old}, which is the RR that is signed with the private part r_{old} of the token T_{old}.

This RR may be sent to T-Reg in step 31 to register TRₐ in the T-Reg. Every TU in the TS that receives the token Tₐ from TU1 can now verify whether Tₐ is a valid token T in the TS.

The token Tₐ (and maybe also TRₐ and/or the RR e.g. as a proof) may be transmitted 15 from TU1 to TU2, e.g. when performing a token transaction, such as a payment transaction. TU2 now performs a switch-modification to switch the token Tₐ from TU1 to become a token T_{c} of TU2. Therefore, a new random number r_{c} is generated at TU2 in step 16. However, vₐ remains the same token element also in the new T_{c}. A token reference TR_{c} is generated based on T_{c} in step 21 by TU2. Since vₐ is not changed, no money has been generated or deleted.

This token reference TR_{c} can be sent 31 to T-Reg as another registration request RR by the TU2 (being generated in step 22), together with a command CO.

Additionally, the RR is signed with the private key rₐ. Signing makes it possible to verify that TU2 is in possession of the (old) token Tₐ, further enhancing security in the TS.

The registration request RR generated 22 in TU2 relating to the switch-modification includes the switch-modification command CO, one output token reference TR_{c} of a token T_{c} to be registered and one input token reference TRₐ of the token Tₐ to be removed from the token reference register T-Reg. The registration request RRₛ also comprises a signed registration request RR_{sig_a}, which is the RR that is signed with the private part rₐ of the token Tₐ.

Each TU may store the RR as a so-called PROOF in case, no data connection to the T-Reg is available or is not desired, e.g. in an offline token transaction.

RR are sent 31 to the T-Reg. RR is received in the T-Reg. After RR has been checked by the T-Reg, the TRₐ is removed from the T-Reg and TR_{c} is stored in the T-Reg in step 41. The TR_{c} replaces the TRₐ so, the RR can also be referred to as replacement request. With storing the TR_{c}, the token T_{c} is registered in the TS.

Each TR is uniquely assigned to a T in the TS and the TR is used to register T in the TS. The TR is therefore the public representation of T from the direct transaction layer TU-LAY. Sole knowledge or possession of the TR alone does not allow the T to be transferred and is not equivalent to the TU being in possession of the T. The TR is used to prevent multiple spending attempts and checks whether token values v have been generated in an improper manner. Therefore, the TR and, if applicable, the history (the proofs) about the tokens T and the RR from TU(s) are stored in the T-Reg.

T may be stored, for example, in a secure wallet, as the TU. These wallets are, for example, software applications within a terminal device in which the TU is operationally embedded. A wallet may be set up as an application on a smartphone, smartcard, or payment terminal. The wallet is used to securely manage tokens T of the TU, generate token references TR, modify tokens T, and/or exchange tokens T. Wallets are used to communicate with the token reference register T-Reg, generate registration requests RR to the token reference register T-Reg, modify tokens T (switch, merge, split) and/or perform transaction of token T to another TU.

As expressed earlier, a transaction within the TU-Lay does not require a communication link to the T-Reg of the TS. The TS is set up to perform a transaction offline, i.e., without a communication link to the T-Reg. A corresponding registration of token T may therefore be temporally downstream of a transfer of token T to a TU.

The T-Reg is a unit within the transaction system TS and is either a central register or database of the transaction system TS or a decentralized register or database (DLT) of the transaction system TS.

The public part R of the token individual key pair (as part of the TR) is generated by applying a cryptographic function to the private part r of the token individual key pair. This function is difficult to reverse and thus provides the transaction system TS with the required security. It holds that R = r * G, where G can be, for example, a global parameter of the transaction system TS, e.g., a generator point of an elliptic curve, here the secp256r1 curve. Any other suitable cryptographic function to receive the R value can be applied as well.

The subject name of a hardware TU (smart card) and a hosted TU (within a Service Provider Unit (not shown in Fig. 1)) may be the TU-ID. The TU-ID may need to fulfil some or all the following criteria:
The TU-ID may need to convey if it is a wallet certificate, or CA certificate or admin-CA end-entity certificate. The TU-ID may need to be small to be transferred and stored in a hardware wallet, e.g. a smart card. The TU-ID may need to fit into the subject field of a certificate, e.g. a length of 16 bytes should not be exceeded. The TU-ID may need to remain stable across changes to certificates. The TU-ID may need to contain information about an SPU, e.g. a financial service provider unit, FSP, that issued the TU, so that the token transaction processors can use to route data to other token transaction processors, e.g., to find the IP address of the token transaction processor.

The TU-ID should contain an identifier of the central bank (not shown in Fig. 1) to allow cross-currency transfers (=multi-currency transactions or multi-currency transaction systems). The TU-ID may need to contain an identifier within the FSP.

TU1 comprises a secure token transaction unit identifier TU1-ID. TU1-ID uniquely assigns the TU1 of the user within the TS. TU2 comprises a secure token transaction unit identifier TU2-ID. TU2-ID uniquely assigns the TU2 of the user within the TS.

In the transaction system TS there may also be a protocol data register P-Reg. This P-Reg stores protocol data PROT that are generated in step 23 by each transaction unit TU after a transaction has been made. The PROT may include the TU1-ID, the TU2-ID and one or more token elements of the token T that is part of the token transfer 15. It can be defined that either the sender (TU1) or the receiver (TU2) or both of the transaction generate the PROT in respective steps 23 and provide the PROT to the P-Reg in step 32. This P-Reg is considered as a pure protocol unit and should not contain any token element of tokens T on which basis, the P-Reg would be in the position of the token T. In other words, the random number r (or the private key r) of each token T is not part of the PROT. However, the monetary value v of each token T may be part of the PROT to protocol the amount of monetary value v being transferred between TU1 and TU2.

The invention presents a secure concept for an electronic wallet onboarding unit 108. The concept is designed to ensure that only one wallet (TU according tonFig.1) is issued per user and to prevent multiple wallets being issued to a single user. A unique onboarding ID is proposed, calculated as a hash of the ID data. Financial service providers (FSPs) 122, such as commercial banks or merchants, create this onboarding ID and query the onboarding unit 108 to determine whether the onboarding ID is already in use.

The onboarding unit 108 acts as an intermediary to check whether a given ID has already been assigned, thereby ensuring a single wallet per user within the system. The unit does not store plain text data such as name, address or ID, but a hash value. The unit simply checks the uniqueness of the input data and responds with a binary "yes/no", returning no further data. This unit performs a "uniqueness check" within the transaction system TS - hereinafter also referred to as 100 - potentially verifying TU-IDs (wallet IDs, device IDs, service IDs) or other data such as cryptographic keys or initial values, as well as hash values of data.

An onboarding repository 106 is designed to prevent an individual from applying for multiple wallets at different FSPs. As the only reliable and consistent identity of an individual is his/her tax ID, the ECB's proposal to hash this tax ID does not necessarily enhance privacy. This is because, should an attacker gain read access to the onboarding repository 106, he could potentially reverse the hash.

A solution is to use a Bloom filter, a data structure that acts as a list of records. However, it only stores a compressed version of the full list. This compression is lossy, which means that false positives can occur. If the Bloom filter returns "no", then the record is definitely not present. As the records in a Bloom filter are unlistable, it is considered to be particularly privacy friendly and efficient.

Instead of storing a list of all onboarding IDs 110, a compressed version of them - a Bloom filter - is stored. This does not produce false negatives, but could potentially produce false positives. If several Bloom filters are used in parallel, preferably 3 or 4, the number of false positives is significantly reduced.

The basic idea is to use a lossy compressed data structure for uniqueness checking in the TS of Fig. 1. The compression is done in such a way that no false negatives are generated. An important strategy is to use two or more different data structures in parallel to reduce the number of false positives. One negative answer is then sufficient, as this answer is always correct.

The onboarding repository 106 can be understood as a Bloom filter of hashed tax IDs, which improves privacy by preventing an attacker from reading the entire database of wallet owners. However, a drawback is that a customer may be wrongly rejected due to the false positive result provided by the Bloom filter's lossy compression.

This problem could be solved by creating a long hash of the control ID (e.g. 512 bits long) and creating multiple overlapping fragments from this hash. Rules on how to form fragments would be defined uniformly across Europe. A separate onboarding repository 106 with a Bloom filter would be used for each fragment. During onboarding, each repository would be queried. Only if all repositories recognise their respective fragments would the client be rejected. Although a client could still be wrongly rejected, this probability could be determined based on the system parameters and set to a sufficiently low level.

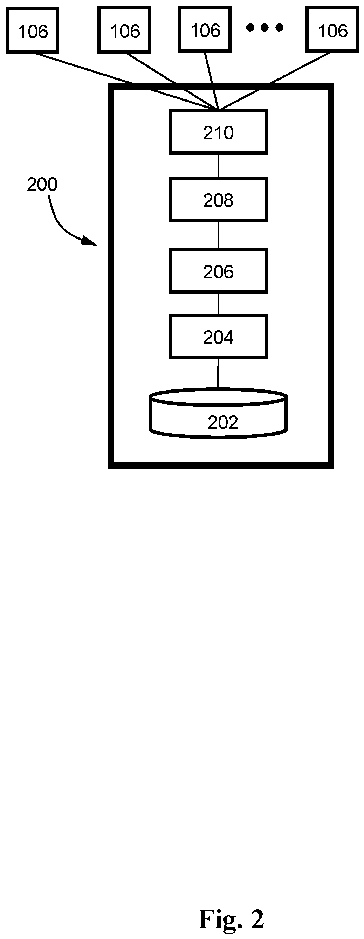

Fig. 2 shows an exemplary embodiment of a secure onboarding unit 200 within an electronic token transaction system 100 (TS) of the present invention. The system 100 is identical to the system TS of Fig. 1 unless otherwise stated.

The token transaction system 100 is adapted to manage the exchange or transfer of electronic tokens T (also referred to 112), i.e. digital representations of assets or value, and the secure onboarding unit 200 is adapted to securely manage processes such as adding new users, e.g. by ensuring their unique identification and registration.

The secure onboarding unit 200 comprises an onboarding repository 202 configured to store a plurality of onboarding IDs for registered participants 106 in the electronic token transaction system 100. The participant 106 may refer to "real" participant, a hardware device or software unit that engages in the token transactions facilitated by the transaction system 100.

The secure onboarding unit 200 further comprises means 206 for accessing the onboarding repository 202, and means 210 adapted to receive an onboarding request from a participant 106 in the electronic token transaction system 100.

The onboarding request from the participant 106 (e.g. a TU) of the electronic token transaction system 100 comprises participant ID data, such as individual identification information of the person or organization using the system, or a transaction unit 108 of a participant 106 such as an account used by the participant for transactions.

The secure onboarding unit 200 further comprises means 208 adapted to generate an onboarding ID by hashing the participant's ID data, and means 204 adapted to verify the uniqueness of the generated onboarding ID against the onboarding repository 202 in a privacy-enhancing manner using a lossy compressed data structure. This may relate to checking a newly generated onboarding ID against existing IDs in the onboarding repository 202 to ensure that it is unique, or has not been used previously. The verification process uses a lossy compressed data structure, which allows for compact storage of the data, improves data privacy as a complete reconstruction of the original data can no longer be made, but occasionally also leads to false positives.

The described features of the secure onboarding unit 200, especially the means 208 adapted to generate an onboarding ID by hashing the participant's ID data, and the means 204 adapted to verify the uniqueness of the generated onboarding ID against the onboarding repository 200, allow to reduce the risk of fraudulent multiple onboarding IDs and/or multiple customer accounts.

The initiation and execution of a transaction within an electronic token transaction system 100 hosted on a server 104 starts with a participant 106, which could be a service provider unit SPU (also referred to 122) or a service customer 124, sending an onboarding request.

This request is received by the means adapted to receive an onboarding request from a participant 106. This component processes the request, in particular the participant's ID data, and sends these data to the means 208 adapted to generate an onboarding ID.

On receipt of the ID data of the participant 106, the means 208 adapted to generate an onboarding ID operates on this data in order to generate a unique onboarding ID. This generation process may include various cryptographic transformations or hashing algorithms designed to obfuscate the original ID data and provide a unique identifier that can be used publicly without revealing sensitive information.

Once the onboarding ID has been generated, it is passed to the means for accessing the onboarding repository 202. The onboarding repository 202 is a secure data storage structure within the secure onboarding unit 200 that holds all previously generated onboarding IDs. The means for accessing the onboarding repository 202 retrieves these IDs for further processing.

The generated onboarding ID and the retrieved existing IDs are then used by the means adapted to verify the uniqueness of the generated onboarding ID. The verification process includes checking the newly generated onboarding ID against the existing IDs within the onboarding repository 202 to determine its uniqueness.

If the verification process returns a binary value indicating "uniqueness = true", this means that the generated onboarding ID is unique within the system and hasn't been used before. The participant 106 may then proceed with the desired transaction.

The transaction itself may involve the issuance, transfer or manipulation of transaction units TU (herein also referred to as 108) or tokens T (112). Each transaction is securely managed and recorded within the electronic token transaction system 100, thereby ensuring the integrity and security of the transaction and the parties involved. In this way, the system maintains a robust security protocol while facilitating efficient and secure transactions.

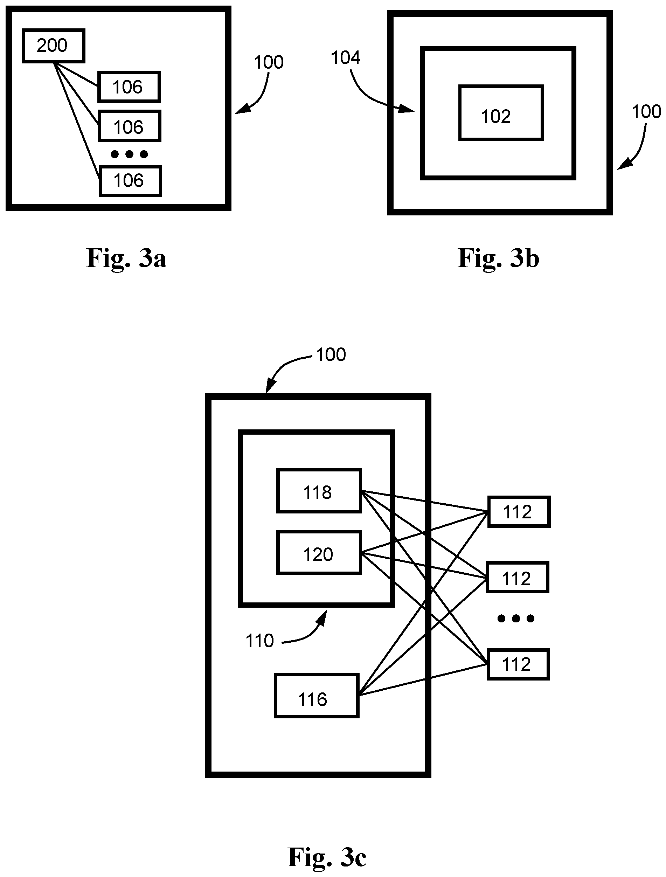

Fig. 3a shows a symbol diagram of a first embodiment of an electronic token transaction system TS (100) according to the invention.

The electronic transaction system 100 comprises at least one transaction unit 108, at least one service provider unit 122 and a secure onboarding unit 200. Token transaction units 108, which are uniquely identifiable, enable secure tracking during transactions, may be viewed as digital container that store information used to make payments, redeem rewards or access other services. Service provider units 122, such as financial institutions or merchants, participate in these transactions, enhancing their security and efficiency. The secure onboarding unit 200 manages subscriber registration and ensures unique identification by generating a unique onboarding ID derived from the ID data of the participants 106. It receives onboarding requests, generates onboarding IDs, accesses an onboarding repository 202 and verifies the uniqueness of these IDs, reducing the risk of fraudulent activity and increasing transaction security.

Fig. 3b shows a symbol diagram of a further embodiment of an electronic token transaction system according to the invention.

The server 104 hosts a platform 102 designed for the secure management of transactions. These token transactions are carried out between at least one service provider 122 and at least one service customer 124, both participating within the platform. In particular, the service customer 124 has customer ID data which is used when accessing the services provided by the service provider 122. Thus, the essence of the system is to facilitate secure and efficient transactions between a service provider 122 and a service customer 124 via a platform 102 hosted on a server 104.

Fig. 3c shows a symbol diagram of a further embodiment of an electronic token transaction system TS (100) according to the invention.

The electronic token transaction system 100 includes additional components for managing tokens 112 on the platform 102. These components include a secure token issuing entity 114 and one or more token registers 116. The token registers 116 are adapted to register tokens 112 within the platform 102. In addition, the token issuing entity 114 comprises token management units. A minting unit 118 is configured to generate new tokens 112 to be issued on the platform 102. Conversely, a melting unit 120 is configured to remove tokens 112 from the platform 102 as required. Together, these components facilitate the creation, registration and deletion of tokens 112 within the system 100.

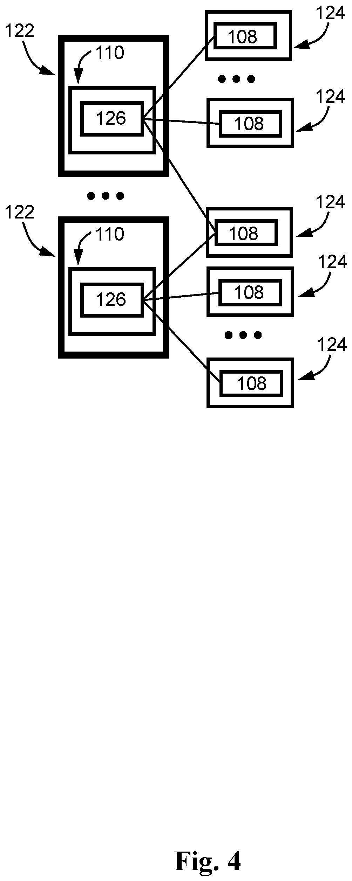

Fig. 4 shows a symbol diagram of a secure service provider unit SPU (122) according to the invention.

The secure service provider unit 122 includes a secure transaction unit issuing entity 110 comprising control means 126 adapted to issue one or more token transaction units 108 to participants 106 within the electronic token transaction system 100. Each transaction unit 108 includes transaction unit ID data. This identification is provided by the secure transaction unit issuing entity 110. The transaction unit ID data is assigned to a specific transaction unit 108 to uniquely identify it within the electronic token transaction system 100. This transaction unit ID data is preferably stored within the specific transaction unit 108. The control means 126 of the secure transaction unit issuing entity 110 is also configured to derive at least a portion of the transaction unit ID data based on digital ID data.

A token transaction unit 108 may be a secure token transaction unit, also referred to as a secure token management unit, or TU, in accordance with the third approach to token transaction systems mentioned. Such a secure token transaction unit is used to manage the token 112 locally within the secure element itself, to modify the tokens and to register the token 112 in the electronic token transaction system 100. The token 112 may be held in a token register 116 also managed by the token transaction unit.

Alternatively, a transaction unit 108 may be a secure account transaction unit, also referred to as a secure account management unit, consistent with the second or third approach of transaction systems. Such a secure account-transaction unit does not manage tokens 112 within a secure element itself, but in a decentralised ledger, such as a blockchain, or a centralised ledger, such as a database, that centrally stores the token 112 in the electronic token transaction system 100. The management, modification and/or registration of the tokens 112 in the electronic token transaction system 100 is initiated by the secure account transaction unit, although the token transaction or token storage is performed remotely from the secure element or service provider unit 122.

The digital ID data is assigned to a respective participant 106 to whom the transaction unit 108 is to be issued in the electronic token transaction system 100. This participant 106 may be a natural person, a legal entity, an organisation, a machine, etc.

The particular participant 106 to which the token transaction unit 108 is to be allocated may be referred to hereinafter as the "real" participant 106.

For security reasons and in order not to jeopardise the privacy and/or anonymity of the electronic payment system, the identification of the "real" participant 106 can only take place if a legal title obliges the cooperation of the organisations involved to trace back to the person.

A service provider 122 may be a unit of a financial service provider, such as a commercial bank or a fintech company. Alternatively, a service provider 122 may be a public authority, a mobile communication service provider or any other regulated or non-regulated party participating in the electronic token transaction system 100, such as a payment transaction involving a central bank digital currency (CBDC) authorised by the token issuing entity 114.

The digital ID data may include a tax number for identifying the user at a tax office; an identity card number for identifying the user's identity card; a passport number for identifying the user's passport; a driver's licence number for identifying the user's driver's licence; an international mobile subscriber identity for identifying the user on a mobile network; or any other uniquely assignable ID data approved by the token issuing entity 114 as valid transaction unit ID data.

The ID data may be - preferably encrypted - centrally stored at a central instance to be accessed by the control means of the secure transaction unit issuing unit. This central instance may be an official authority or a central bank of the electronic payment system or any other trusted authority of the payments ecosystem as per assignment of the token issuing authority. Preferably, it is not stored at the service provider.

The ID data may only be received by the control means upon explicit request including a compliance process to avoid unnecessary transmittal of these ID data.

The ID data is cryptographically secured by the control means to derive the part of the transaction unit ID data.

The control means of the transaction unit issuing entity is further configured to derive at least a part of the transaction unit ID data based on at least the onboarding ID including a hash of the specific ID data.

This allows a link to be maintained between the transaction unit 108 and the onboarding ID, thereby enhancing the security of transactions managed by the platform 102. Given that the onboarding ID is generated for a participant during the onboarding process and the transaction unit is then issued to the participant, maintaining a link between the transaction unit and the onboarding ID means that a link is established and stored within the system linking the specific transaction unit 108 to the onboarding ID of the participant 106. This link enhances the security of transactions by allowing the transaction unit 108 to be verified and authenticated based on its association with the participant's onboarding ID. This association helps prevent unauthorised access or use of transaction units 108 and provides a mechanism to ensure that only valid and authorised participants 108 can transact on the platform 102. It adds an additional layer of security and integrity to the overall transaction management process.

The digital ID data may comprise a tax number for participant 106 identification at a tax office; an identity card number for recognizing the participant's identity card; a passport number for participant's passport identification; a driver's license number for identifying the participant's driver's license; an international mobile subscriber identity for identifying the participant 106 on a mobile network; or any other uniquely assignable ID data approved by the token issuing entity 114 as valid transaction unit ID data.

The ID data, preferably encrypted, may be centrally stored at a central instance accessible by the control means 126 of the secure transaction unit issuing entity 110. This central instance could be an official authority or a central bank of the electronic payment system or any other trusted authority of the payments ecosystem as per assignment of the token issuing authority. Preferably, it is not stored at the service provider 122.

The ID data can only be received by the control means 126 upon explicit request including a compliance process to prevent unnecessary transmission of these ID data.

The ID data is cryptographically secured by the control means 126 to derive the part of the transaction unit ID data.

The control means 126 of the transaction unit issuing entity 110 is further configured to derive at least a part of the transaction unit ID data based on the onboarding ID which includes a hash of the specific ID data.

This permits a link between the transaction unit 108 and the onboarding ID, enhancing the security of transactions managed by the platform 102. Given that the onboarding ID is generated for a participant 106 during the onboarding process and the transaction unit 108 is then issued to the participant 106, maintaining a link between the transaction unit 108 and the onboarding ID means that a link is established and stored within the system linking the specific transaction unit 108 to the participant's onboarding ID. This link augments the security of transactions by enabling the transaction unit 108 to be verified and authenticated based on its association with the participant's onboarding ID. This association helps deter unauthorized access or use of transaction units and offers a mechanism to ensure that only valid and authorized participants can transact on the platform. It adds an additional layer of security and integrity to the overall transaction management process.

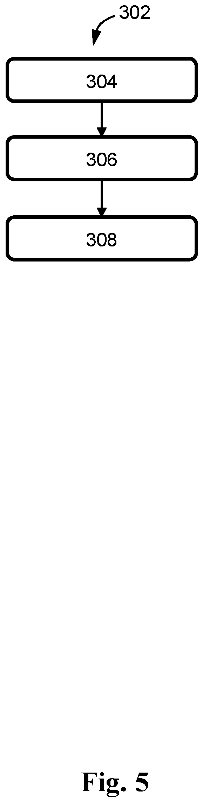

Fig. 5 shows a symbol diagram of the method of securely managing transactions according to the invention.

The method 302 is designed to securely manage transactions in an electronic token transaction system 100 between a service provider 122 and a service customer 124 having customer ID data and using the services of the service provider 122. The method 302 comprises the steps of:
- providing 304 an onboarding repository that stores onboarding IDs for registered customers;
- generating 306 an onboarding ID by implementing a hashing process on the customer ID data;
- verifying 308 the uniqueness of the generated onboarding ID against the onboarding repository in a privacy-enhancing approach using a lossy compressed data structure.

After verifying 208 the uniqueness of the onboarding ID, a result is returned, which can be a binary value, e.g. "yes/no". In case of "yes", the uniqueness is considered satisfied and the participant 106 is allowed to access the transaction system 100. In the case of "no", where uniqueness is not satisfied, the participant 106 is not allowed to access the transaction system 100. In the latter case, a message may be sent to the participant 106 containing information about the decision and the reasons for it. The participant 106, currently implemented as a piece of hardware or software, can forward the information to the person or institution associated with the participant 106.

By verifying the uniqueness of the onboarding ID in a privacy-enhancing manner, the method mitigates the risk of fraudulent multiple onboarding IDs and/or customer accounts. The use of a lossy compressed data structure in the verification process helps to enhance privacy by ensuring secure and confidential transactions between the service provider 122 and the service customer 124. This process emphasizes the privacy, security and uniqueness of onboarding IDs for customers, thereby reducing potential fraudulent activity in the system.

### Reference signs

- TS, 100: Electronic (payment) transaction system
- TU, 108: Transaction unit in TS, wallet
- SPU, 122: (Financial) service provider unit
- TU-ID: Identification of TU, Wallet-ID
- T-Reg, 116: Token reference register
- 1: Storage unit
- P-Reg: Protocol data register
- PROT: Protocol data
- Reg-LAY: Registration layer
- TU-LAY: Token transfer layer
- RR: Registration request, replacement request
- T, 112: Token
- TR: Token reference
- v: Monetary value of T
- r: Secret, private key of token-individual key pair
- R: public key of token-individual key pair
- CO: Command
- sig: Signature
- 15: transfer of token
- 16: Modify token
- 21: Generate token reference
- 22: Generate RR
- 23: Generate PROT
- 31: registration request
- 32: protocol data transfer
- 41: Replace TR by remove TR and store TR
- 106: participant in the TS
- 110: TU issuing entity
- 114: T issuing entity
- 118: minting unit
- 120: melting unit
- 124: service customer
- 126: control means
- 200: secure onboarding unit
- 202: onboarding repository
- 204: means adapted to verify the uniqueness of the generated onboarding ID
- 206: means for accessing the onboarding repository
- 208: means adapted to generate an onboarding ID
- 210: means adapted to receive an onboarding request from a participant
- 302: method of securely managing transactions
- 304: providing an onboarding repository
- 306: generating an onboarding ID
- 308: verifying the uniqueness of the onboarding ID

## Claims

1. A secure onboarding unit (200) within an electronic token transaction system (100), the onboarding unit comprising:
an onboarding repository (202) configured to store a plurality of onboarding IDs for registered participants (106) in the electronic token transaction system (100);
means (206) for accessing the onboarding repository (202); and
means (210, 208, 204) adapted to:
i) receive an onboarding request from a participant (106) of the electronic token transaction system (100), the onboarding request comprising ID data of the participant (106) and/or of a transaction unit (108) of the participant (106);
ii) generate an onboarding ID by hashing the ID data, and
iii) verify the uniqueness of the generated onboarding ID against the onboarding repository (202) in a privacy-enhancing manner using a lossy compressed data structure, thereby reducing the risk of fraudulent multiple onboarding IDs and/or customer accounts.

2. The onboarding unit (200) according to claim 1, wherein
the onboarding unit (200) is adapted to return a unique result to the participant (106) after verifying the uniqueness of the onboarding ID, the unique result being a binary value, thereby preserving the privacy of customer data, and/or
the lossy compressed data structure is adapted to prevent from generating false negatives, and/or
an onboarding ID or each onboarding ID is associated with exactly one participant (106) and/or exactly one transaction unit (108).

3. The onboarding unit (200) according to claim 1 or 2, wherein
The ID data comprises one or more of the following: a tax ID; a transaction unit identifier; a terminal identifier; a service identifier; a cryptographic key; a digital signature, a service provider unit identifier.

4. The onboarding unit (200) according to one of the preceding claims, wherein
the hashed ID is divided into overlapping fragments, preferably wherein a fragment or each fragment has its own onboarding repository (202) with a lossy compressed data structure, in particular wherein rejection of a customer is allowed only if the repositories confirm their respective fragments, thereby reducing the likelihood of erroneous rejections due to false positives and/or enhancing privacy by further obfuscating user data.

5. The onboarding unit (200) according to one of the preceding claims, wherein
the onboarding unit (200) is adapted to implement and perform a uniqueness check for each individual onboarding process using two or more different lossy compressed data structures arranged in parallel, thereby reducing the likelihood of false positives and increasing the accuracy of the uniqueness check.

6. The onboarding unit (200) according to one of the preceding claims, wherein
the lossy compressed data structure is implemented as at least one of the following: Bloom filter, Cuckoo filter, Quotient filter, thereby ensuring that no false negatives are produced.

7. An electronic token transaction system (100) comprising:
- one or more transaction units (108);
- one or more service providers (122);
- an onboarding unit (200) according to claims 1 to 6.

8. The transaction system (100) according to claim 7, further comprising
a server (104) hosting a platform (102) for securely managing transactions between at least one service provider (122) and at least one service customer (124) having customer ID data and using services of the service provider (122).

9. The transaction system (100) according to claim 7 or 8, wherein
the platform (102) is adapted to securely manage at least one of the following: financial transactions, e-commerce transactions, healthcare transactions, logistics transactions.

10. The transaction system (100) according to one of the claim 7 to 9, wherein
the platform (102), especially the service provider (122), is adapted to issue a single transaction unit (108) per service customer (124) based on a uniqueness check by the onboarding unit (200) for a proposed onboarding ID against a lossy compressed data structure that stores all valid onboarding IDs, thereby ensuring system integrity by preventing multiple transaction unit ownership by a single user.

11. The transaction system (100) according to one of the claim 7 to 10, wherein
the one or more service providers (122) are configured to manage electronic transactions, in particular electronic payment transactions, the service provider (122) comprising:
a transaction unit issuing entity (110) comprising control means (126) configured to issue one or more transaction units (108) for service provider (122) on the platform (102), wherein each transaction unit (108) comprises transaction unit ID data being provided by the transaction unit issuing entity (110), the transaction unit ID data being assigned to a specific transaction unit (108) for uniquely identifying the transaction unit (108) in the platform (102), the transaction unit ID data being stored in the specific transaction unit (108);
wherein the control means (126) of the transaction unit issuing entity (110) is further configured to derive at least a part of the transaction unit ID data based on at least the onboarding ID including a hash of the specific digital ID data,
thereby maintaining a link between the transaction unit (108) and the onboarding ID, thus enhancing the security of transactions managed by the platform (102).

12. The transaction system (100) according to one of the claim 7 to 11, further comprising:
- a secure token issuing entity (114); and
- one or more token registers (116) for registering the tokens (112) of the platform (102),
the token issuing entity (114) comprising:
- a minting unit (118) configured to generate a new token (112) to be issued in the platform (102); and
- a melting unit (120) configured to delete tokens (112) to be deleted from the platform (102).

13. A method (302) of securely managing transactions in an electronic token transaction system (100) between at least one service provider (122) and at least one service customer (124) having customer ID data and using services of the service provider (122), the method comprising:
providing (304) an onboarding repository for storing onboarding IDs for registered customers;
generating (306) an onboarding ID by hashing the customer ID data; and
verifying (308) the uniqueness of the onboarding ID against the onboarding repository (304) in a privacy-enhancing manner using a lossy compressed data structure,
thereby reducing the risk of fraudulent multiple onboarding IDs and/or customer accounts.

14. The method according to claim 13, further comprising at least one of the steps of:
issuing the one or more transaction units (108) by a service provider (122) of the platform (102);
receiving the onboarding ID of a service customer (124) by control means (126) of a service provider (122);
providing transaction unit ID data by deriving at least a part of the transaction unit ID data based on at least the onboarding ID;
assigning the transaction unit ID data to a transaction unit (108) for the service customer (124) to whom the transaction unit (108) is to be issued in the platform (102); and
issuing the transaction unit (108) to the service customer (124) in the platform (102).

15. A non-transitory computer readable storage medium for tangibly storing computer program instructions capable of being executed by a processor, the computer program instructions implementing the steps of one of the preceding method claims.
